# EUROPEAN PATENT SPECIFICATION

(11) **EP 2 804 743 B1**
(45) Date of publication and mention of the grant of the patent: **28.10.2015**
(21) Application number: 12700290.5
(22) Date of filing: 17.01.2012
(51) Int. Cl.: B29C 67/00, H04R 25/00

(54) **METHOD OF MANUFACTURING A HEARING AID COMPONENT**
VERFAHREN ZUR HERSTELLUNG EINER HÖRGERÄTEKOMPONENTE
PROCÉDÉ DE FABRICATION D'UN COMPOSANT D'AIDE À L'AUDITION

(43) Date of publication of application: 26.11.2014
(73) Proprietor: Sonova AG, 8712 Stäfa (CH)
(72) Inventor: RIEPENHOFF, Matthias, 8041 Zürich (CH); SCHLESINGER, Axel, 8712 Stäfa (CH)
(74) Representative: Schwan Schorer & Partner mbB
(86) International application number: PCT/EP2012/050634
(87) International publication number: WO 2013/107500

(56) References cited:
- EP-A2- 0 354 698
- WO-A2-2011/033135
- US-A1- 2007 047 752

## Description

The invention relates to a method of manufacturing a hearing aid component, such as a part of a hearing aid housing.

Hearing aids are miniaturized devices which incorporate electronical, mechanical and electrochemical components such as microphones, loudspeakers, coils, switches, processors, amplifiers, various kinds of sensors, electrical connectors and batteries in a housing. These components require seals against humidity and dirt and dampening structures against shock and vibrations in order to prevent failure of the components and improve performance of the device. Hearing aid loudspeakers are also called receivers. Typically receivers and microphones have hard, metallic housings and require dampening structures to be mechanically isolated from their surrounding in order to reduce feedback. Receivers and microphones are vibration sensitive components. The problem of feedback caused by vibration is due to the fact that during normal operation of the hearing aid the receiver is outputting an amplified signal of the microphone of the hearing aid. Since vibrations are transmitted between components which are in close mechanical contact also these components are considered to be vibration sensitive. Therefore a housing of a hearing aid or a part of a hearing aid which contains a receiver or a microphone is vibration sensitive.

Examples for non-vibration sensitive components are for example earpieces which do not contain receivers or microphones.

Switches and battery compartments comprise movable mechanical parts which may cause openings to the inner parts of a hearing aid housing and therefore require adequate sealing against humidity and dirt. Since all electronic components are humidity sensitive also such mechanical components are regarded as to be humidity sensitive components.

Usually, such seals and dampening structures are made of a soft material and are located on a curved substrate made of a harder material, such as a hard plastic material or a ceramic material. Typically the housing of a hearing aid containing such components is manufactured by an injection moulding process. Sealings and dampening structures on some areas of the housing can be created contemporarily when a two-component injection moulding process is applied. However, often such process is not easy to control and the required tools are expensive. Further, the capability of injection moulding processes to create fine structures is limited. The choice of acceptable soft performing material which can be processed in a two-component injection moulding process is limited.

The raw material for the injection moulding process may contain additional non-organic materials like powders of metals or glas to reach specific optical, electrical or mechanical properties. For creation of ceramic materials an additional sintering step might be necessary, a contemporary creation of dampening structures is not possible.

It is known that three-dimensional structures can be produced by inkjet printing. Such 3D inkjet printing is an additive manufacturing process which is typically used for rapid prototyping. For example, a 3D printing system may generate a 3D prototype based on data provided by a CAD system. Such 3D printing systems are already commercially available, for example, from the company Objet Geometries or from the company Z Corporation.

It has been proposed to use a 3D inkjet printing process for manufacturing hearing instrument earpieces, see for example US 2010/0017006 A1, US 2007/0116311 A1, GB 2344556 A, US 2004/0107080 A1, and US 7,660,427 B2.

US 2008/0070181 A1 relates to an oral appliance used for coupling sound from a hearing instrument into a tooth, which oral appliance may be manufactured by using a 3D inkjet printing process.

WO 2011/000375 A1 relates to an carplug of a receiver-in-the-car-hearing aid, which earplug comprises a shell individually shaped according to the measured shape of the user's ear. The outer surface of the shell is provided with electrodes for measuring brain wave signals. The electrodes are applied onto the shell by an inkjet printing process using conductive ink.

EP 0 354 698 A2 relates to a method of manufacturing a hearing aid component by providing a substrate component and applying a viscoelastic layer as a functional structure. The viscoelastic layer has the property of being tacky and is attached to the substrate by using this property or by further using an adhesive.

US 2007/0047752 A1 relates to a method of manufacturing a hearing aid, wherein an elastomer or a hydrogel material is attached to a substrate component by bonding, coating or by using the adhering properties of the materials.

WO2011/033135 A2 relates to a method of manufacturing a hearing aid wherein the housing is made of metallic or ceramic part by using a powder injection molding technique, with an additional element made of a polymeric material being arranged within the housing for placing functional parts within or at the housing.

It is an object of the invention to provide a method of manufacturing a hearing aid component, which is cost effective, which has as little geometrical and topological constraints as possible, which is easy to control and which is highly flexible in case of design changes and has better acoustical and mechanical properties and allows to combine multiple functions in one component.

According to the invention, this object is achieved by a method as defined in claim 1.

The invention is beneficial in that, by applying, by an inkjet printing process utilizing a jet of droplets having a volume from 0.1 *nl* to 10 *nl,* a functional structure of a viscoelastic material having a thickness of at least 50 µm onto a surface of a substrate component, a relatively hard substrate can be provided with a relatively soft functional structure in a simple, effective and contactless manner. The method of the invention has only little constraints regarding the geometry and topology of the functional structure and is highly flexible in case of redesign of the hearing aid component. In particular, such manufacturing method may replace a two-component injection moulding process, thereby saving the costs resulting from the tools required for injection moulding. Thus, the manufacturing method according to the invention is particularly suited for small series and for individually shaped components.

Moreover the invention is also suitable for modification of existing components like receivers, microphones, coils, switches or knobs. The inventive method offers the possibility to apply a dampening or sealing structure on such a component instead of creating it inside the hearing aid shell. This alternative process creates a dampening structure between the hearing aid shell and a receiver or microphone or another vibration sensitive component.

Preferred embodiments of the invention are defined in the dependent claims.

Hereinafter, examples of the invention will be illustrated by reference to the attached drawings, wherein:
- Fig. 1: is a schematic view of an inkjet printing setup for applying a functional structure onto a substrate;
- Fig. 2A: is a schematic side view of a part of a receiver housing of a hearing aid comprising vibration dampening structures;
- Fig. 2B: is a top view of the part of Fig. 2A;
- Fig. 2C: is a schematic view of the part of Fig. 2A and 2B during manufacturing;
- Fig. 3: is a lateral view of several hearing aid components, wherein areas to be provided with a viscoelastic functional structure are marked by arrows; and
- Fig. 4: is a perspective view of hearing aid components, wherein areas to be provided with viscoelastic functional structures are marked by arrows.

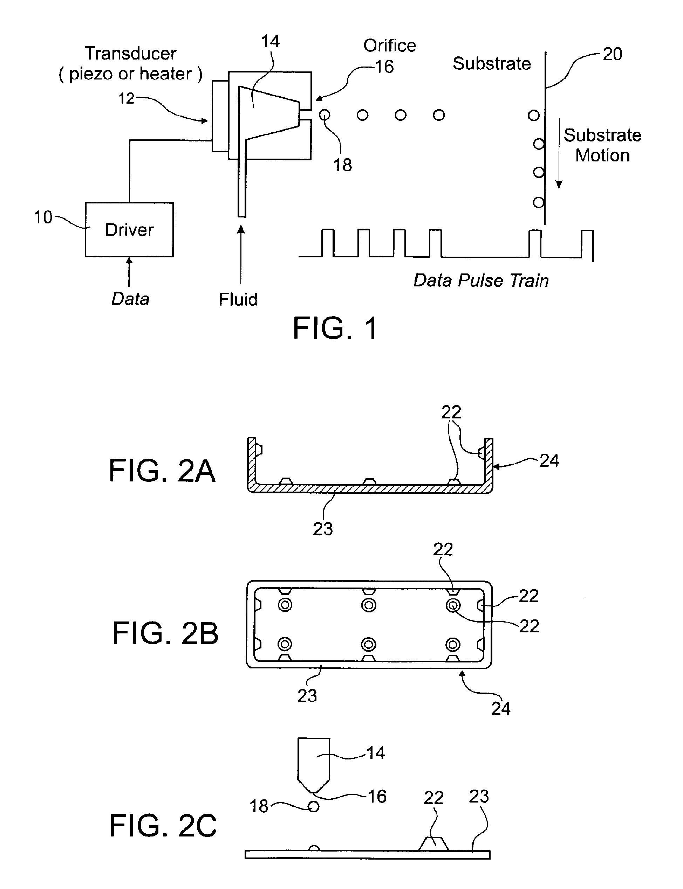

In Fig. 1 a system for applying 3D structures onto a substrate by inkjet printing is shown schematically. The printer system comprises a driver 10 which drives a transducer 12 (such as a piezotransducer or a heater) according to data supplied at the input of the driver 10, a fluid reservoir 14 and an orifice (i.e. a nozzle) 16. Fluid is supplied to the fluid reservoir 14 at ambient pressure, and the transducer 12 acts on the fluid in the fluid reservoir 14 in such a manner that a droplet 18 is ejected through the orifice 16 when the driver 10 has received a corresponding data pulse. The droplets 18 are ejected towards a substrate surface 20 which moves into a direction perpendicular to the jet of droplets 18. The droplets 18 of the jet of the inkjet printing process according to the invention have a volume from 0.1 *nl* to 10 *nl.*

Three-dimensional structures can be created, for example, by scanning the substrate surface 20 repeatedly in such a manner that the structures are built up layer-by-layer (i.e. each point of the substrate surface area 20 is brought several times into the jet of droplets 18; in Fig. 1 the generation of the first layer of the structure is shown).

An example of the generation of a 3D structure is illustrated in Fig. 2C, wherein several bump-like functional structures 22 are applied onto a substrate component 23 in order to produce a part 24 of a hearing aid speaker housing. The functional structures 22 are designed to act as damping elements. A side view and a top view of the speaker housing part 24 after manufacturing are shown in Figs. 2A and 2B, respectively.

The substrate component may be, for example, a polymer or a glass reinforced polymer. It may also be made of a metal or a ceramic, or it may contain metallic and/or ceramic materials.

The substrate component is typically produced by an injection moulding process and is preferably made of a relatively hard plastics material or of a ceramic material.

Alternatively, the substrate may be made of metal, for example a receiver or a microphone.

The hardness of synthetic or metallic substrate material may be classified in Vickers; if the material is a metal, it may have a hardness ranging from 10 to 3000 HV 3; for plastic materials the hardness may range from 1 to 10000 HV 0.01.

In view of the fact that injection moulding processes often produce surfaces of relatively low roughness it may be necessary to apply a surface treatment to the surface of the substrate component prior to applying the functional structure. For example, the surface of the substrate component may be activated and/or conditioned by irradiation, such as x-rays, accelerated electrons, UV laser light, visible laser light or IR laser light, prior to applying the functional structure. However, also other surface treatment, in particular for roughening the surface of the substrate component, may be applied. Preferably, the surface of the substrate component has a surface roughness of at an Ra value between 12 to 33 according VDE 3400 prior to applying the functional structure.

The functional structure, after having been applied onto the substrate component, may be cured by applying heat or radiation.

The thickness of the functional structures at least 50 µm and preferably not more than 500µm.

The hardness of the functional structures is lower than the hardness of the substrate component. The functional structures are made of a viscoelastic material which preferably has a hardness in the range of 10-80 ShoreA.

For example, the material of the functional structures may be polyamide 6.6, polyamide 12, propylene, polyurethane, pebax, TPE, a silicone compound or an acryl material.

In Fig. 2 an example is shown wherein the functional structures are designed to act as a vibration damping and shock absorbing element. According to other examples, the functional structures may be designed to act as seals.

According to the example of Fig. 2, the component provided with the functional structures is a housing part of a hearing aid loudspeaker. However, also other components of hearing aid may be provided with such functional structures, for example a housing part of the hearing aid, a part of a hearing aid ear-hook, a part of a control element for manual control of a hearing aid, a housing part of a hearing aid microphone, a part of a hearing aid circuitry, or a hearing aid audio shoe. Also receivers or microphones may be provided with the functional structure.

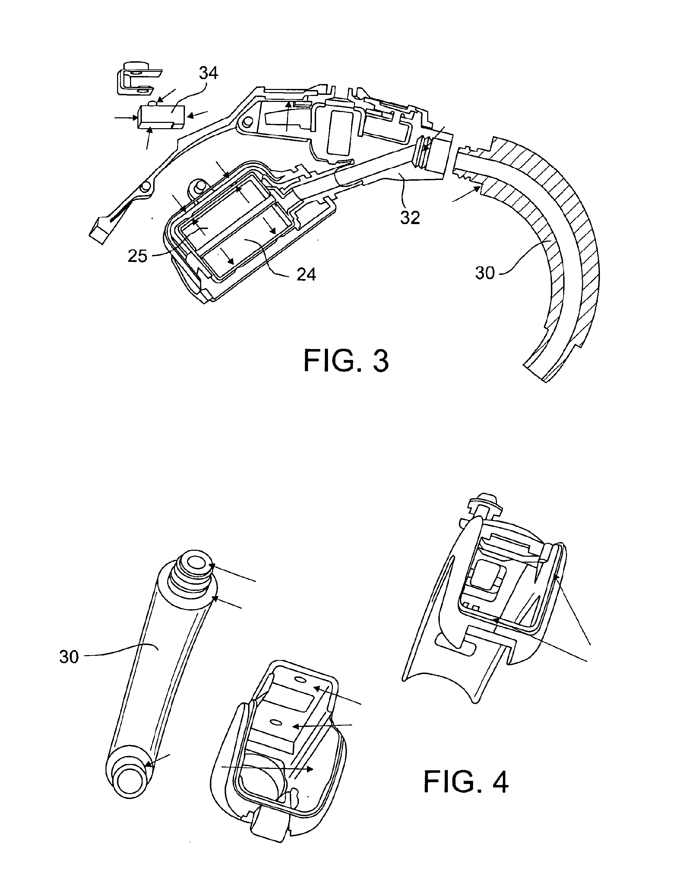

Any hearing aid component which requires seals and/or damping elements may be provided with a functional element applied by an inkjet printing process according to the invention. Examples of such components are shown in Figs. 3 and 4. For example, both ends of a hearing aid ear-hook 30 may be provided with damping elements. Also the end of a hearing aid housing part 32 designed to receive one end of the ear-hook 30 may be provided with a seal.

In Fig. 3 receiver housing parts 24 and 25 are shown which may be provided with damping elements. Further, in Fig. 3 a manual control element 34 is shown which may be provided with seals. In addition, functional structures may be applied to the manual control element in such a manner that the outer side of the manual control element 34 feels soft to the user.

Preferably, the hearing aid is a BTE (behind-the-ear) or ITE (in-the-ear) hearing aid.

Inkjet printing processes also could be used to provide hearing instrument components with two-dimensional (i.e. thinner than 50 µm) surface coatings in order to impart certain surface properties to the respective hearing instrument component, such as to provide for a hydrophobic surface or for an electrically conduction surface. However, such processes do not form part of the present invention which relates to the generation of 3D functional structures on hearing aid components.

## Claims

1. A method of manufacturing a hearing aid component (24, 25, 30, 32, 34), comprising:
providing a substrate component (23);
applying a functional structure (22) of a viscoelastic material having a thickness of at least 50µm onto a surface of the substrate component by an inkjet printing process utilizing a jet of droplets (18) having a volume from 0.1 *nl* to 10 *nl*, wherein the hardness of the functional structure is lower than the hardness of the substrate component.

2. The method of claim 1, wherein the substrate component is a vibration sensitive or humidity sensitive component of a hearing aid.

3. The method of one of claims 1 and 2, wherein the substrate component is produced by an injection moulding process.

4. The method of one of the preceding claims, wherein the surface of the substrate component (23) is treated prior to applying the functional structure (22).

5. The method of claim 4, wherein the surface of the substrate component (23) is roughened prior to applying the functional structure (22).

6. The method of one of claims 4 and 5, wherein the surface of the substrate component (23) is activated and/or conditioned by irradiation, such as x-rays, UV-laser light, visible laser light or IR laser light, prior to applying the functional structure (22).

7. The method of one of the preceding claims, wherein after applying the functional structure (22) onto a surface of the substrate component (23), the functional structure is cured by applying heat, gas or radiation.

8. The method of one of the preceding claims, wherein the surface of the substrate component (23) has a roughness of an Ra value of at least 12 prior to applying the functional structure (22).

9. The method of one of the preceding claims, wherein the hardness of the material of the functional structure (22) is from 10 to 80 ShoreA.

10. The method of one of the preceding claims, wherein the material of the functional structure (22) is a silicone compound, and/or an acryl material.

11. The method of one of the preceding claims, wherein the hardness of the material of the substrate component (23) is 10 to 3000 HV 3 if the material is a metal, and 1 to 10000 HV 0.01 if the material is a plastics material.

12. The method of one of the preceding claims, wherein the functional structure is a seal.

13. The method of one of claims 1 to 11, wherein the functional structure is a vibration damping element (22).

14. The method of one of claims 1 to 11, wherein the functional structure is a shock absorbing element (22).

15. The method of one of the preceding claims, wherein the component is a housing part (32) of the hearing aid, a part of a hearing aid ear-hook (30), a housing part (24, 25) of a hearing aid loudspeaker, a part of a manual hearing aid control element (34), a housing part of a hearing aid microphone, a part of an hearing aid circuitry, or a hearing aid audio shoe.

## Patentansprüche

1. Verfahren zum Herstellen einer Hörgerätekomponente (24, 25, 30, 32, 34), wobei:
eine Substratkomponente (23) bereitgestellt wird;
eine funktionale Struktur (22) aus einem viskoelastischen Material mit einer Dicke von mindestens 50 µm auf eine Oberfläche der Substratkomponente mittels eines Tintenstrahldruckverfahrens appliziert wird, welches einen Strahl von Tröpfchen (18) mit einem Volumen von 0,1 *nl* bis 10 *nl* verwendet, wobei die Härte der funktionalen Struktur geringer als die Härte der Substratkomponente ist.

2. Verfahren gemäß Anspruch 1, wobei die Substratkomponente eine vibrationsempfindliche oder feuchtigkeitsempfindliche Komponente eines Hörgeräts ist.

3. Verfahren gemäß einem der Ansprüche 1 und 2, wobei die Substratkomponente mittels eines Spritzgussverfahrens hergestellt wird.

4. Verfahren gemäß einem der vorhergehenden Ansprüche, wobei die Oberfläche der Substratkomponente (23) vor dem Applizieren der funktionalen Struktur (22) behandelt wird.

5. Verfahren gemäß Anspruch 4, wobei die Oberfläche der Substratkomponente (23) vor dem Applizieren der funktionalen Struktur (22) aufgeraut wird.

6. Verfahren gemäß einem der Ansprüche 4 und 5, wobei die Oberfläche der Substratkomponente (23) vor dem Applizieren der funktionalen Struktur (22) mittels Strahlung, wie beispielsweise Röntgenstrahlung, UV-Laserlicht, sichtbares Laserlicht oder Infrarotlaserlicht, aktiviert und/oder konditioniert wird.

7. Verfahren gemäß einem der vorhergehenden Ansprüche, wobei nach dem Applizieren der funktionalen Struktur (22) auf die Oberfläche der Substratkomponente (23) die funktionale Struktur mittels Einwirkung von Wärme Gas oder Strahlung gehärtet wird.

8. Verfahren gemäß einem der vorhergehenden Ansprüche, wobei die Oberfläche der Substratkomponente (23) vor dem Applizieren der funktionalen Struktur (22) eine Rauigkeit mit einem Ra-Wert von mindestens 12 aufweist.

9. Verfahren gemäß einem der vorhergehenden Ansprüche, wobei die Härte des Materials der funktionalen Struktur (22) zwischen 10 und 80 Shore A liegt.

10. Verfahren gemäß einem der vorhergehenden Ansprüche, wobei es sich bei dem Material der funktionalen Struktur (22) um eine Silikonverbindung und/oder ein Acrylmaterial handelt.

11. Verfahren gemäß einem der vorhergehenden Ansprüche, wobei die Härte des Materials der Substratkomponente (23) zwischen 10 und 3000 HV 3 liegt, falls es sich bei dem Material um ein Metall handelt, und zwischen 1 und 10000 HV 0,01 liegt, falls es sich bei dem Material um ein Kunststoffmaterial handelt.

12. Verfahren gemäß einem der vorhergehenden Ansprüche, wobei es sich bei der funktionalen Struktur um eine Dichtung handelt.

13. Verfahren gemäß einem der Ansprüche 1 bis 11, wobei es sich bei der funktionalen Struktur um ein Schwingungsdämpfungselement (22) handelt.

14. Verfahren gemäß einem der Ansprüche 1 bis 11, wobei es sich bei der funktionalen Struktur um ein schockabsorbierendes Element (22) handelt.

15. Verfahren gemäß einem der vorhergehenden Ansprüche, wobei es sich bei der Komponente um einen Gehäuseteil (32) des Hörgeräts, einen Teil eines Hörgerätohrbügels (30), ein Gehäuseteil (24, 25) eines Hörgerätlautsprechers, einen Teil eines manuellen Hörgerätsteuerelements (34), einen Gehäuseteil eines Hörgerätmikrofons, einen Teil einer Hörgerätschaltung oder einen Hörgerätaudioschuh handelt.

## Revendications

1. Procédé de fabrication d'un composant d'audioprothèse (24, 25, 30, 32, 34), comprenant :
l'obtention d'un composant substrat (23) ;
l'application d'une structure fonctionnelle (22) d'un matériau viscoélastique ayant une épaisseur d'au moins 50 µm sur une surface du composant substrat par un procédé d'impression à jet d'encre utilisant un jet de gouttelettes (18) ayant un volume de 0,1 nl à 10 nl, la dureté de la structure fonctionnelle étant inférieure à la dureté du composant substrat.

2. Procédé selon la revendication 1, dans lequel le composant substrat est un composant sensible aux vibrations ou sensible à l'humidité d'une audioprothèse.

3. Procédé selon une des revendications 1 et 2, dans lequel le composant substrat est produit par un procédé de moulage par injection.

4. Procédé selon une des revendications précédentes, dans lequel on traite la surface du composant substrat (23) avant d'appliquer la structure fonctionnelle (22).

5. Procédé selon la revendication 4, dans lequel on rend la surface du composant substrat (23) rugueuse avant d'appliquer la structure fonctionnelle (22).

6. Procédé selon une des revendications 4 et 5, dans lequel la surface du composant substrat (23) est activée et/ou conditionnée par irradiation, telle que des rayons X, une lumière laser UV, une lumière laser visible ou une lumière laser IR, avant l'application de la structure fonctionnelle (22).

7. Procédé selon une des revendications précédentes dans lequel, après avoir appliqué la structure fonctionnelle (22) sur une surface du composant substrat (23), on durcit la structure fonctionnelle en appliquant de la chaleur, un gaz ou un rayonnement.

8. Procédé selon une des revendications précédentes, dans lequel la surface du composant substrat (23) a une rugosité d'une valeur Ra d'au moins 12 avant l'application de la structure fonctionnelle (22).

9. Procédé selon une des revendications précédentes, dans lequel la dureté du matériau de la structure fonctionnelle (22) est de 10 à 80 Shore A.

10. Procédé selon une des revendications précédentes, dans lequel le matériau de la structure fonctionnelle (22) est un composé de silicone, et/ou un matériau acrylique.

11. Procédé selon une des revendications précédentes, dans lequel la dureté du matériau de composant substrat (23) est de 10 à 3000 HV 3 si le matériau est un métal, et de 1 à 10 000 HV 0,01 si le matériau est un matériau plastique.

12. Procédé selon une des revendications précédentes, dans lequel la structure fonctionnelle est un joint d'étanchéité.

13. Procédé selon une des revendications 1 à 11, dans lequel la structure fonctionnelle est un élément amortissant les vibrations (22).

14. Procédé selon une des revendications 1 à 11, dans lequel la structure fonctionnelle est un élément absorbant les chocs (22).

15. Procédé selon une des revendications précédentes, dans lequel le composant est une partie de boîtier (32) de l'audioprothèse, une partie d'un contour d'oreille d'audioprothèse (30), une partie de boîtier (24, 25) d'un haut-parleur d'audioprothèse, une partie d'un élément de commande manuelle d'audioprothèse (34), une partie de boîtier d'un microphone d'audioprothèse, une partie d'un circuit d'audioprothèse, ou un sabot audio d'audioprothèse.
